# EUROPEAN PATENT APPLICATION

(11) **EP 1 712 162 A1**
(43) Date of publication of application: **18.10.2006**
(21) Application number: 05103032.8
(22) Date of filing: 15.04.2005
(51) Int. Cl.: A47G 19/14, A47J 45/06

(54) **Traditional teapot having rotatable holding means to avoid burns**

(71) Applicant: Güzelis Porselen Sanayi ve Ticaret A.S., Mercan, Istanbul 34450 (TR)
(72) Inventor: Erdogan, Erol Güzelis Porselen Sanayi ve Tic. A.S., Mercan 34450, Istanbul (TR)
(74) Representative: Calik, Güven

(57) **Abstract**

The objects of the invention are achieved through use of handles (11) rotatably attached to the boiling and to the brewing vessels (13) so as to switch between conventional vertical position and a set of predetermined positions, which is a position farther from the heat radiating vessel bodies. According to the present invention, the boiling and the brewing bowl handles are provided with a connection device (14) allowing free rotation of said handles around said connection device without disconnecting from the same. Another embodiment according to the present invention could be such that the predetermined switched position, which is generally a horizontal position set to a distance sufficient to keep the handles out of the direct effect of the radiated heat, is determined by a slot (17) into which a spring (15) loaded ball (16) engages within said connection device.

## Description

### Technical Field of the Invention

The present invention relates to a teakettle, which is a traditional eastern cuisine equipment consisting of two separate pots, one for boiling water and the other for brewing the drinking tea, placed above the latter.

### Background of the Invention / Prior Art

Tea is exceedingly consumed all around the world. It rather became a socio-cultural phenomenon in many cultures. In the country of the applicant too, it is consumed in several occasions per day. It is the most common hot drink which is served to guests at first instance, which is preferred when taking a short break to working and on the table of breakfast.

Teapots are believed to appear first in the 14^{th} century China. Although in severe competition with electric kettles, which became widely used for automated operation advantages, traditional teapots are still believed to be indispensable for a tasty tea pleasure in the country of the applicant. Traditional teapots are usually formed out of porcelain or ceramic. Although porcelain teapots hold heat the best, ceramic or stoneware teapots are also widely used.

A modern teapot typically comprises two containers, one directly in contact with the gas burner fire and the other placed above the latter in order for brewing the drinking tea, which is processed from the young leaves and leaf buds of the plant Camellia Sinensis. These two vessels (or bowls), the kettlepot for boiling water and the teapot for brewing the drinking tea are both conventionally provided with handles and spouts.

Preparing tea using classical equipment basically comprises the steps of boiling water in one bowl and simultaneously heating in the upper bowl dry drinking tea with the steam of the boiling water in desired amount. The water is then added onto the heated drinking tea and it is left to be brewed in low flame for a certain period. The brewed tea and hot water are then mixed and the resulting tea is served.

The problem in regard to traditional way of tea preparing might be overheating of bowl handles, which necessitates use of for instance a piece of cloth to grip the handles on the part of the user. Alternatively, cooling to a certain extent might be waited for. Overheating happens to be the case most of the time especially if the vessel or bowl is not centered on the gas burner so as to let the flame overflow in the external sides of the vessel and of eventually the handle.

To overcome such inconsistencies, some design measures can be taken in order to prevent overheating of the bowl handles during boiling and brewing. The present invention accordingly relates to an improved arrangement of teapot handles so as to overcome the drawbacks described above.

### Objects of the Invention

The primary object of the invention is to provide a boiling vessel whose handle is not directly subjected to heat and to thereby provide such a boiling bowl handle.

Although the brewing bowl is less affected from the gas burner heat and from the heat radiated from vessels' bodies, this one is subject to heat too. Accordingly, one further object of the present invention is to provide a brewing vessel with a handle suitable for safely holding with bare hands the first moment at which the tea is ready.

### Summary of the Invention

The objects of the invention are achieved through use of handles rotatably attached to the boiling and to the brewing vessel so as to switch between conventional vertical position and a set of predetermined positions, which is a position farther from the heat radiating vessel bodies. According to the present invention, the boiling and the brewing bowl handles are provided with a connection device allowing free rotation of said handles around said connection device without disconnecting from the same. Another embodiment according to the present invention could be such that the predetermined switched position, which is generally a horizontal position set to a distance sufficient to keep the handles out of the direct effect of the radiated heat, is determined by a slot into which a spring loaded ball engages within said connection device.

### Brief Description of the Figures

In the following the invention is described in more detail with reference to the drawings, which are given solely for the purpose of exemplifying the invention, in which:

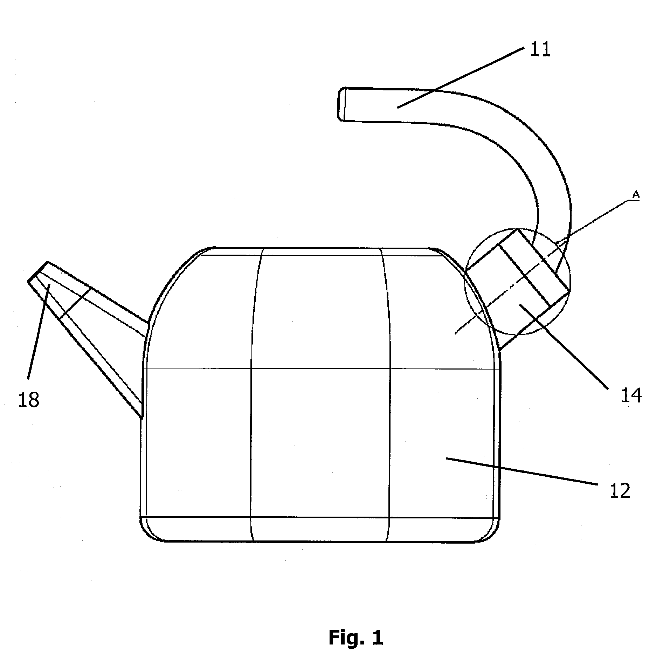

Fig. 1 is a side view of the boiling bowl with a handle rotated to the uppermost position.
Fig. 2 is demonstrates the vertical cross-section A in Fig. 1.

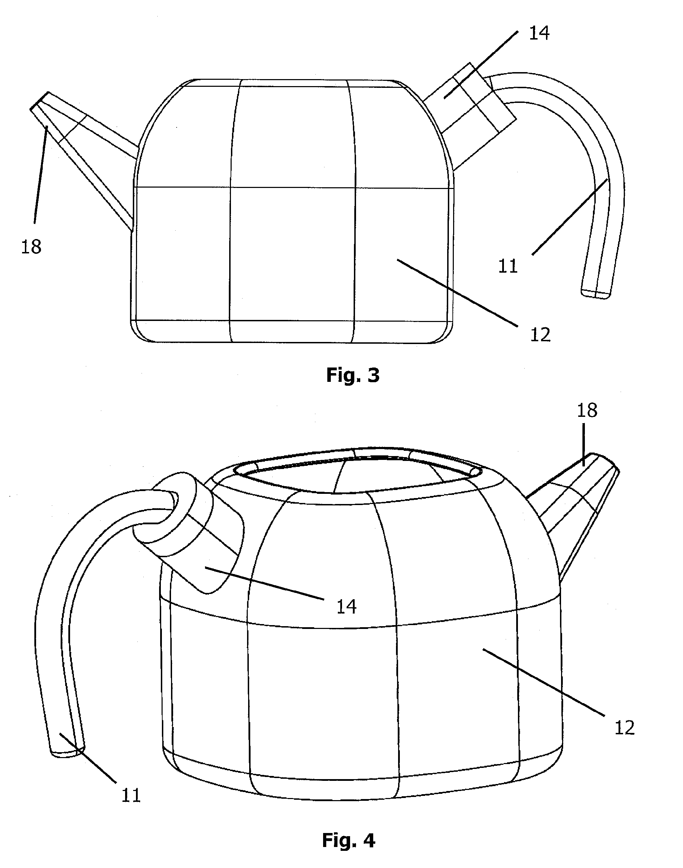

Fig. 3 is a side view of the boiling bowl with a handle at its conventional position.
Fig. 4 demonstrates a perspective side view of the boiling bowl.
Fig. 5 demonstrates a dismantled top view of the connection device according to one embodiment of the present invention.
Fig. 6 demonstrates a cross-section of the outer portion of the connection device, whose surface normally lies on the longitudinal axis of the handle (11) and on which a plurality of slots are disposed according to one embodiment of the present invention.

### Detailed Description of the Invention

Now referring to the figures outlined above, the objects of the invention are achieved through use of handles (11) rotatably attached to the boiling (12) and to the brewing bowl (13) so as to switch between conventional vertical position and a set of predetermined positions, which is a position farther from the heat radiating vessel bodies.

The boiling vessel (12) according to the present invention, may also be used alone, that is without the brewing vessel (13). It will then be closed by a conventional lid (14). Under these circumstances, the boiling vessel (12) handle (11) may be set to a position either horizontal as is the case where the brewing vessel (13) is used too, either to a position vertical occupying the space emptied by the non-use of said brewing vessel (13). To this end, the boiling vessel (12) handle (11) may be designed as a gripping tool suitable for levering the same from the top of the vessel more comfortably.

According to the present invention, the boiling (12) and the brewing (13) bowl handles (11) are provided with a connection device (14) allowing free rotation of said handles (11) around said connection device without disconnecting from the same. The predetermined switching position, which is generally a horizontal position set to a distance sufficient to keep the handles (11) out of the direct effect of the radiated heat, is determined by a plurality of slots (17) into which a set of spring (15) loaded balls (16) engages within said connection device. This can be achieved by way of different configurations.

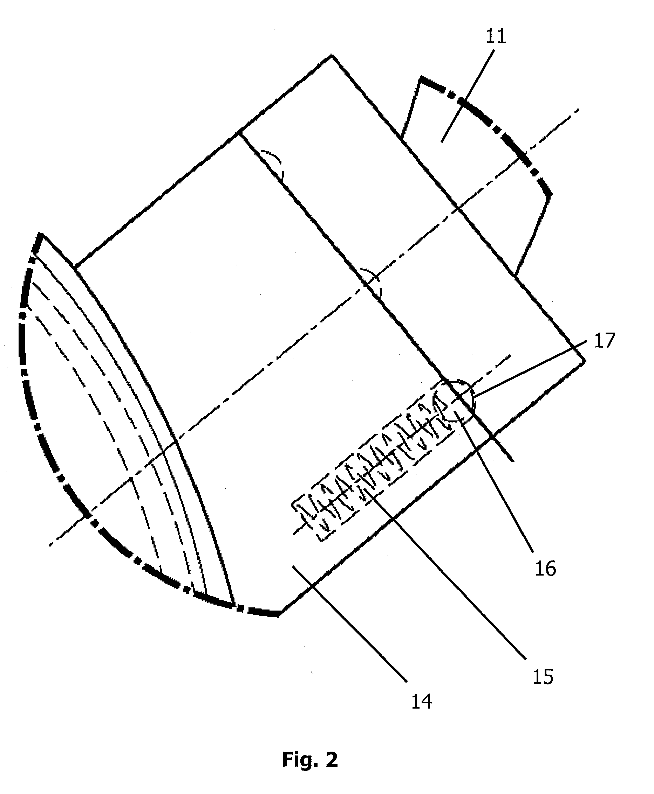

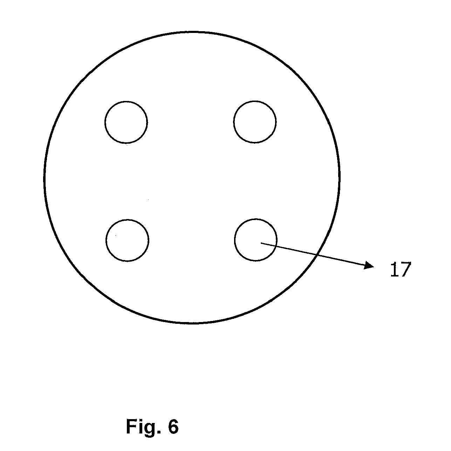

In one configuration, said spring (15) loaded balls (16) may be placed parallel to the longitudinal axis of the handle (11) and to the surface normal of the vessel body within the connection device (14) (Fig. 2). Rotation of the handle will then effect rotation of the outer portion (Fig. 6) of the connection device (14), comprising said plurality of slots (17). To this end, a spring loaded ball trapped in a slot (17) located on the innermost surface of said outer portion of the connection device (14), although resisting the gravity torque tending to release it, can be easily released by way of gently rotating the handle (11). In other words, only a limited percentage of the volumes of said spring (15) loaded balls (16) are trapped within said slots (17). The stationary spring-ball couples hence confront corresponding rotating slots (71) on said outer portion of the connection device (14).

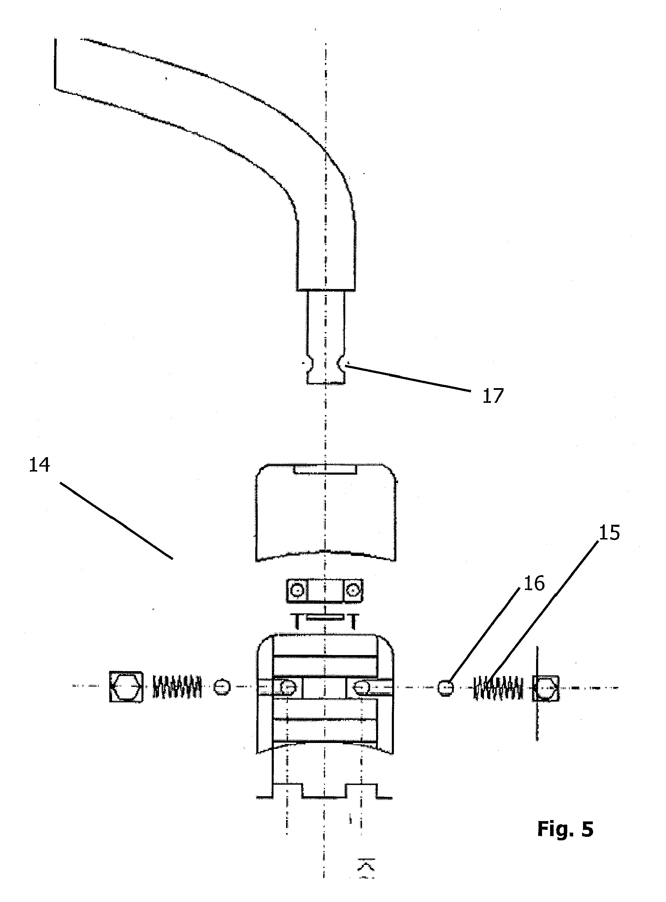

Another configuration to ensure locking of the handles (11) in predetermined positions could be done by way of placing said spring (15) loaded balls (16) parallel to the vessel body within the connection device (14). In this configuration, rotation of the handle will effect rotation of a set of slots (17) on the longitudinal axis of the handle (11) within the connection device (14). The stationary spring (15) loaded balls (16) engage into said holes (17) when opposite to the same and let the handle (11) keep its current position (Fig. 5). The slots (17) in Fig. 5 are not continuous along the periphery of the end portion of the cylindrical handle body (11), they are instead as large as only to receive part of the ball (16) volume in several points along the circular path on the lateral surface of said cylinder body.

The vessels such as teapots and teakettles are usually coated with enamel. However, coating the very tips of the spout (18) portion with enamel proved to be difficult due to low surface adherence at these tip portions. In addition, forming the spout out of an enamel coated surface will ease deformation in this region particularly in case a wire mesh screen is used in the spout region for filtering purposes. The present invention provides a bowl spout that is made out of stainless steel instead of enamel coating in the spout region. Said stainless steel spout portion seats on the very tips of the enamel coated portion so as to cover the same. In other words, the spout is fixedly attached to the protruding portion corresponding to the inner aperture of said spout. Use of such an additional material also eliminates darkening in the spout region due some drinks showing coloring characteristics.

The brewing bowl (13) according to the present invention essentially shows the same characteristics as the boiling bowl and any feature explained and shown in regard to the boiling bowl (12) in this specification also applies to the brewing bowl (13).

In sum, according to the present invention, said connection device (14) is equipped on the inside with a plurality of stationary spring (15) loaded balls (16) allowing said balls (16) engaging into a plurality of corresponding slots (17) so as to lock said handles (11) in a predetermined position. Said plurality of spring (15) loaded balls (16) are either disposed parallel to the longitudinal axis of the handle (11) and to the surface normal of the vessel body within the connection device (14) so as to engage into slots (17) disposed on a cross-section vertical to the longitudinal axis of the handle (11) within the outer portion of the connection device (14) or parallel to the surface normal of the vessel body within the connection device (14) so as to engage into discontinuous slots (17) disposed along the periphery of the end portion of the cylindrical handle body (11).

## Claims

1. A traditional teapot assembly comprising a boiling vessel (12) suitable for boiling water and a brewing vessel for brewing tea in the position placed on the latter, both vessels having spouts (18) and handles (11), the latter for levering each of said bowls, **characterized in that**;
said handles (11) are attached to the vessel bodies through a rotatable connection device (14).

2. A traditional teapot assembly as described in Claim 1 wherein said connection device (14) is equipped on the inside with a plurality of stationary spring (15) loaded balls (16) allowing said balls (16) engaging into a plurality of corresponding slots (17) so as to lock said handles (11) in a predetermined position.

3. A traditional teapot assembly as described in Claim 2 wherein said plurality of spring (15) loaded balls (16) are disposed parallel to the longitudinal axis of the handle (11) and to the surface normal of the vessel body within the connection device (14) so as to engage into slots (17) disposed on a cross-section vertical to the longitudinal axis of the handle (11) within the outer portion of the connection device (14).

4. A traditional teapot assembly as described in Claim 2 wherein said spring (15) loaded balls (16) are disposed parallel to the surface normal of the vessel body within the connection device (14) so as to engage into discontinuous slots (17) disposed along the periphery of the end portion of the cylindrical handle body (11).

5. A traditional teapot assembly as described in any of the preceding claims wherein said slots (17) are suitable for receiving only a limited percentage of the volumes of said spring (15) loaded balls (16) so as to let the handle (11) keep its current position and simultaneously enable releasing of the same by way of exerting a substantially limited rotating force to the handle (11).

6. A traditional teapot assembly as described in Claim 1 wherein said spouts (18) are made out of inoxidable steel.

## Amended claims

### Amended claims in accordance with Rule 86(2) EPC.

**1.** A traditional teapot assembly comprising a boiling vessel (12) suitable for boiling water and a brewing vessel for brewing tea in the position placed on the latter, both vessels having spouts (18) and handles (11), the latter for levering each of said bowls, **characterized in that**;
said handles (11) are attached to the vessel bodies through a rotatable connection device (14) which has one or more predetermined positions (stations) along its circular trajectory and which can hold the handle (11) in place when the handle is rotated onto said position.

**2.** A traditional teapot assembly as described in Claim 1 wherein said connection device (14) is equipped on the inside with a plurality of stationary spring (15) loaded balls (16) allowing said balls (16) engaging into a plurality of corresponding slots (17) so as to lock said handles (11) in a predetermined position.

**3.** A traditional teapot assembly as described in Claim 2 wherein said plurality of spring (15) loaded balls (16) are disposed parallel to the longitudinal axis of the handle (11) and to the surface normal of the vessel body within the connection device (14) so as to engage into slots (17) disposed on a cross-section vertical to the longitudinal axis of the handle (11) within the outer portion of the connection device (14).

**4.** A traditional teapot assembly as described in Claim 2 wherein said spring (15) loaded balls (16) are disposed parallel to the surface normal of the vessel body within the connection device (14) so as to engage into discontinuous slots (17) disposed along the periphery of the end portion of the cylindrical handle body (11).

**5.** A traditional teapot assembly as described in any of the preceding claims wherein said slots (17) are suitable for receiving only a limited percentage of the volumes of said spring (15) loaded balls (16) so as to let the handle (11) keep its current position and simultaneously enable releasing of the same by way of exerting a substantially limited rotating force to the handle (11).

**6.** A traditional teapot assembly as described in Claim 1 wherein said spouts (18) are made out of inoxidable steel.
